# EUROPEAN PATENT APPLICATION

(11) **EP 2 042 981 A1**
(43) Date of publication of application: **01.04.2009**
(21) Application number: 09150880.4
(22) Date of filing: 09.09.2003
(51) Int. Cl.: G06F 3/06

(54) **Apparatus for recording or reproducing multimedia data using hierarchical information structure and information storage medium thereof**

(30) Priority: 11.09.2002 KR 20020054945; 07.03.2003 US 452546 P
(62) Divisional of application: 03795489.8
(71) Applicant: Samsung Electronics Co., Ltd., Suwon-si, Gyeonggi-do 442-742 (KR)
(72) Inventor: Moon, Seong-Jin, Suwon-si Gyeonggi-do (KR); Jung, Kil-Soo, Hwaseong-gun 445-970 Gyeonggi-do (KR); Chung, Hyun-Kwon, Seoul (KR); Park, Sung-Wook, Mapo-gu 121-022 Seoul (KR)
(74) Representative: Clark, David James

(57) **Abstract**

A multimedia data recording apparatus, a multimedia data reproducing apparatus, and multimedia data storage include a first layer storing multimedia data; and a second layer in which, when the multimedia data is divided into a record unit and a reproduction unit, information of attributes of the record unit and a relationship between the record unit and the reproduction unit are described with a markup language using elements and the attributes. Navigation data, which is used to control a selection of the reproduction unit and reproduction sequence, is recorded on a third layer.

## Description

### Technical Field

The present invention relates to recording and reproducing multimedia data, and more particularly, to apparatuses to record and/or reproduce multimedia data using a hierarchical information structure and an information storage medium thereof.

### Background Art

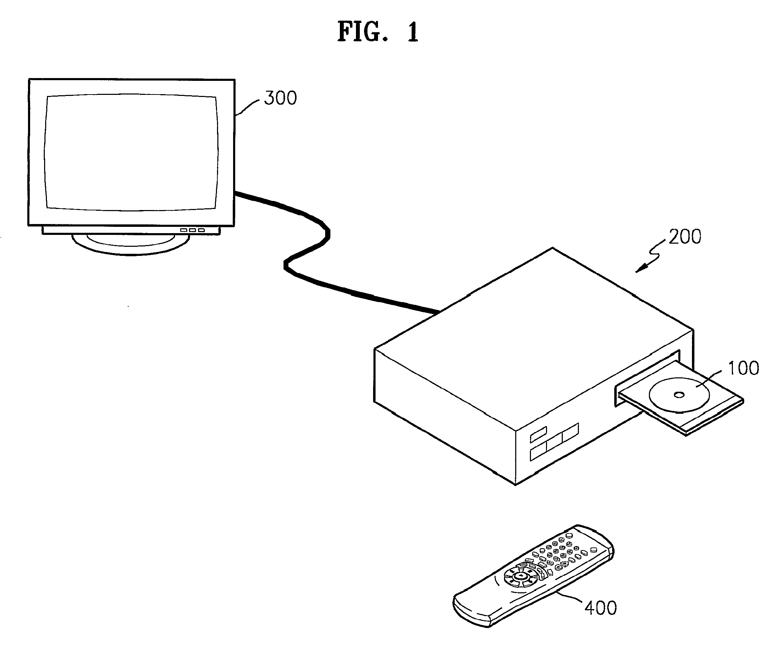

A multimedia data recording/reproducing apparatus requires additional information, such as attributes of multimedia information or a sequence of data reproduction, to record the multimedia information on or to reproduce the multimedia information from a data storage medium. FIG. 1 illustrates the conventional multimedia data recording/reproducing apparatus 200 including the data storage medium 100 and connected to a user output device 300. The multimedia data recording/reproducing apparatus 200 may be controlled using a user input device 400, such as a remote control. In general, in order to record the additional information, additional information tables are formed at a particular position or in a particular file of the existing data storage medium. Examples of the data storage medium include compact discs (CDs), video CDs, and digital versatile discs (DVDs). In the additional information table, information is described by a location and a length of a data field. Thus, a new information table needs to be created whenever a new type of multimedia information medium is designed. In particular, navigation information, to select a reproduction unit or to determine the reproduction sequence, is recorded in table formats on the DVD. However, such navigation information is mixed with the information that defines reproduction units, thereby making it difficult to carry out a navigation.

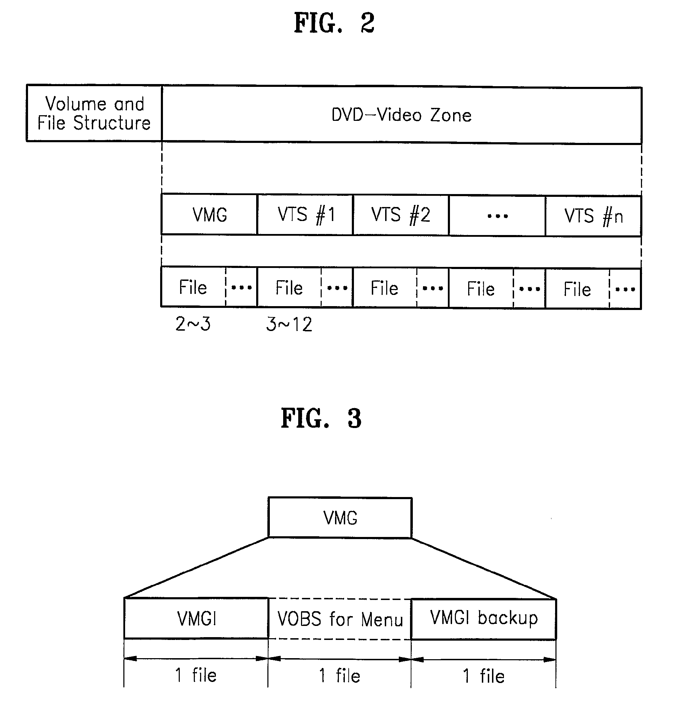

The data structure of a conventional DVD will now be described. Referring to FIG. 2, a DVD includes a video manager (VMG) area and a plurality of video title set (VTS) areas. Control information and title selection information are stored in the VMG area, where the title information of a reproduction unit is stored in the plurality of VTS areas. The VMG area includes two or three files and each VTS area includes three to twelve files.

The VMG area is illustrated in FIG. 3 in detail. The VMG area includes a video manager information (VMGI) area to store the additional information regarding the VMG area, a video object set (VOBS) area to store video object information of a menu, and a VMGI backup area. Each of the above areas includes a single file. The VOBS area may or may not be included in the VMG area, but the other two areas, the VMGI area and the VMGI backup area, are required.

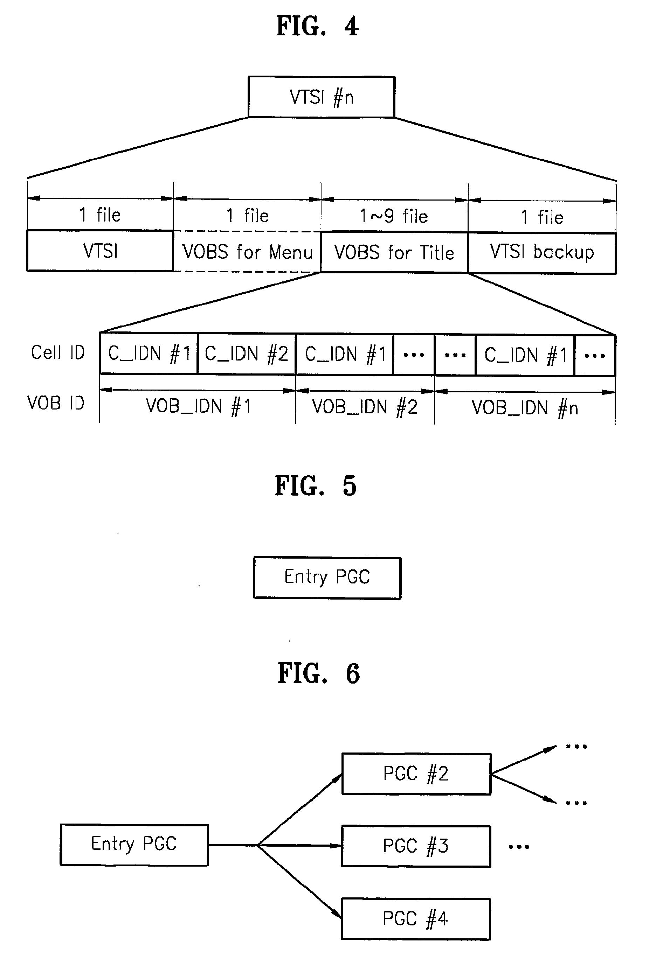

Title information and VOBS are stored in the VTS area. A plurality of titles may be recorded in the VTS area. The VTS area is illustrated in detail in FIG. 4.

Referring to FIG. 4, video title set information (VTSI), the VOBS for menu, which is a video object set for the VTS menu, VOBS for title, which is the video object set for the titles in a VTS, and VTSI backup data are recorded in VTS area #n. However, the VOBS for the title may not be included in VTS area #n. Each VOBS is divided into a video object (VOB) on cells, which are recording units. Each VOB includes the cells. According to an aspect of the present invention, the cell is determined to be a lowest-ranked unit of data.

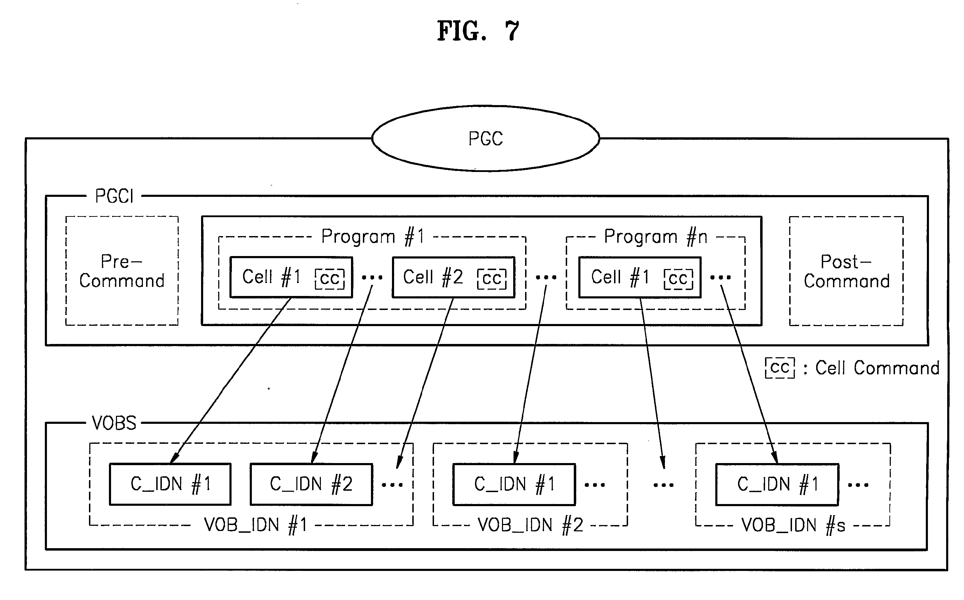

A reproduction unit is represented by a hierarchical structure in which a title is present at a corresponding top level. The title includes one program chain (PGC) or a plurality of PGCS linked to one another. Here, a first PGC is called an entry PGC. FIG. 5 illustrates the reproduction unit one_sequential_PGC_title, including only a single PGC (an entry PGC). FIG. 6 illustrates the reproduction unit in which the title is linked to the plurality of PGCs. After reproduction of the PGC, another PGC is reproduced by selecting from at least one of several PGCs. In this case, a selection command may be stored in program chain information (PGCI). Controlling the sequence of PGC reproduction is called the navigation. FIG. 7 illustrates the structure of the PGC. The PGC is stored in an information structure described as a PGCI format. The PGCI includes a pre-command in which navigation commands are stored, a post-command, and a plurality of program information units. The pre-command is carried out before the reproduction of a related PGC and the post-command is carried out after the reproduction of the PGC. Each program information unit includes a plurality of cell information units, each cell linked to the cell in the VOB, which is the recording unit. Each cell included in each reproduction unit has a cell command that is carried out after reproduction of the cell. Therefore, the PGCI represents a hierarchical reproducing structure of the PGC, i.e., the reproduction unit, in which the lowest-ranked reproduction unit cell is linked to the lowest-ranked record unit cell.

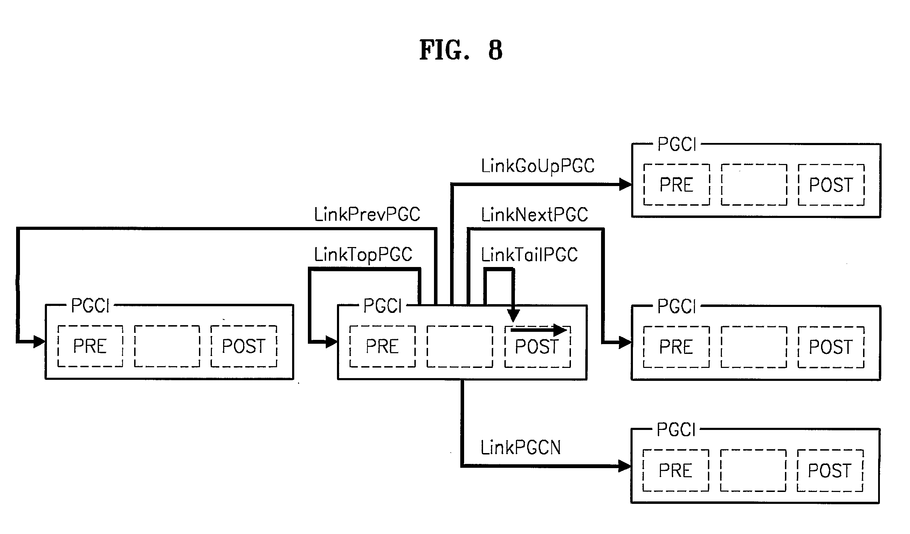

FIG. 8 illustrates a case of branching a new PGC using command navigation information during or after reproduction of the PGC. In other words, it is possible to easily control the sequence of the PGC reproduction using navigation commands such as LinkPrevPGC, LinkTopPGC, LinkNextPGC, LinkTailPGC, LinkGoUpPGC, and LinkPGCN. That is, the PGC has reproduction units and also navigation information.

A program in the PGC is referenced by a link called a part of title (PTT).

In the case of the DVD, the above information is stored in a binary table format, that is, the information is recorded in table formats where the information is recorded within a predetermined bit length on a particular position of the table.

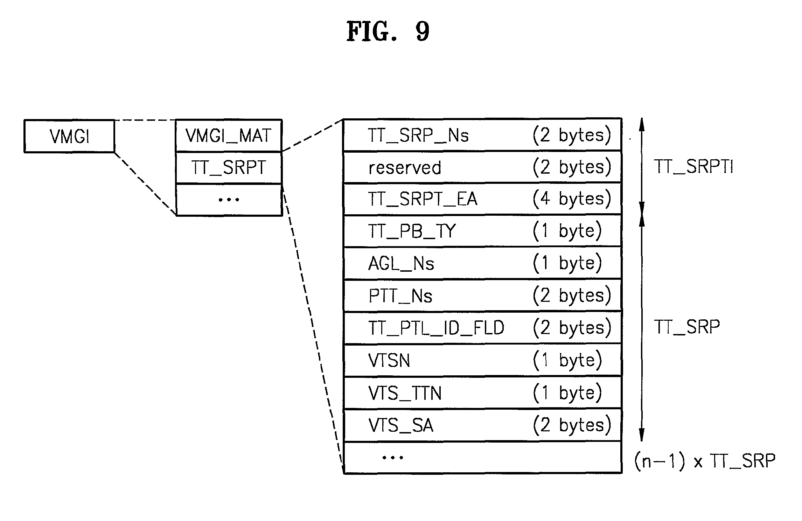

FIG. 9 illustrates a data structure of a TT_SRPT information table, which is title information in the VMGI. Referring to FIG. 9, the leading two bytes of the TT_SRPT information indicates a total number of titles n. The next two bytes of the TT_SRPT information is reserved for extension information defined in a future standard. The other bytes following the two bytes represent TT_SRP information that individually describes the titles. In particular, a VTN number, designated by a related title, and a title number in a related VTS are recorded with predetermined bit lengths on certain positions of VTSN and VTS_TTN, respectively.

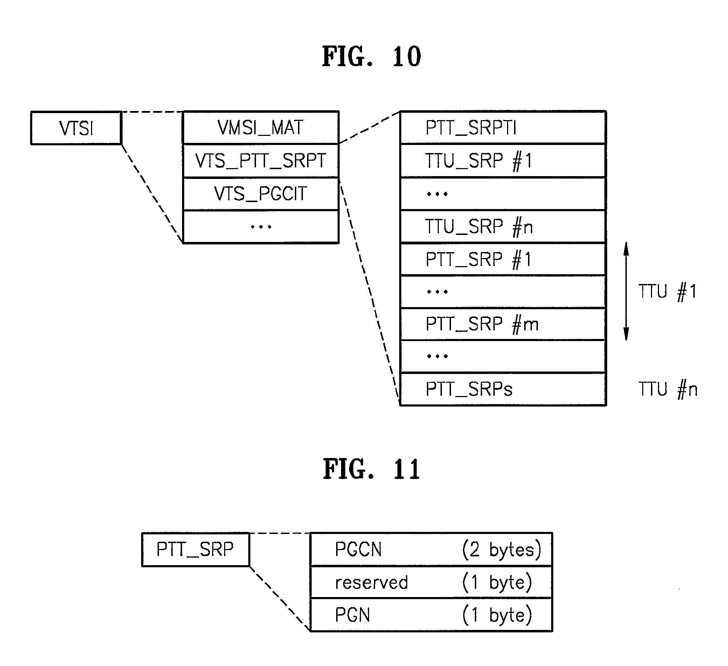

FIG. 10 illustrates a data structure of VTS_PTT_SRPT information in the VTSI. Referring to FIG. 10, the VTS_PTT_SRPT information includes TTU_SRPs corresponding to a number of the titles of the related VTS. The respective TTU_SRPs include information to designate one of the PTT_SRPs following the TTU_SRPs. Therefore, a PTT_SRP between a PTT_SRP, which is designated by a TTU_SRP, and a PTT_SRP, which is designated by a next TTU_SRP, form the title. That is, a plurality of Part_of_Title Search Pointers PTT-SRPs are present in each title, resulting in a division of the title into several PTTs. The PTT may be viewed as a chapter, for easier understanding. FIG. 11 illustrates contents of the PTT_SRP, designating the PGC and a program in the PGC. In conclusion, the title is divided into several PTTs and each PTT is linked to a program in the PGC.

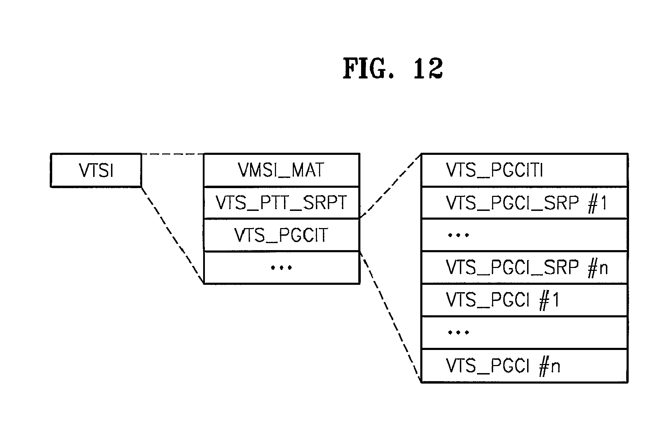

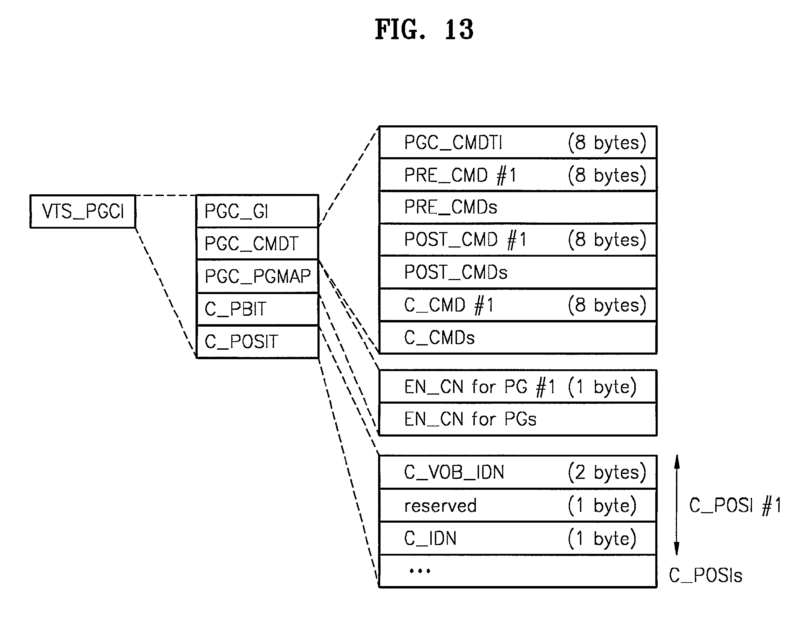

FIG. 12 illustrates a data structure of a PGCIT VTS_PGCIT, representing a PGCI table in the VTSI. Referring to FIG. 12, a total number of the programs and the cells that belong to the PGC are stored in a VTS_PGCITI. Also, the VTS_PGCIT stores VTS_PGCIs as many as a plurality of VTS_PGCs, which belong to the VTS. FIG. 13 illustrates a detailed data structure of the VTS_PGCI. In the VTS_PGCI, various information are recorded within particular bit lengths at particular positions in table formats, including a PGC_CMDT, which describes a pre-command, a post-command, a cell command, and so on. Also, the VTS_PGCI includes a PGC_PGMAP, which indicates program start cells as many as the programs, and a C_POSIT, which is the information for linkage of respective cells to respective record units.

As described above, in the case of the conventional DVD, which is a multimedia data storage medium, the video object data and the data regarding the reproduction units and the navigation are recorded as the titles and the PGCs. However, the additional data in the PGCs is stored in the table format within particular lengths at a certain position. The commands to navigate are also stored in a limited space, together with the additional data, which define reproduction units. Therefore, the advent of a new reproduction unit results in a change of the table location; thus, making it difficult to implement an extension for the new reproduction. To solve this problem, reserved spaces are formed in a plurality of regions, which still limits any extension for the future. In the worst-case scenario, a table structure may be redefined. In fact, existing multimedia data storage media such as the CDs, the VCDs, the MDs, and the DVDs have table structures of their own.

Meanwhile, advancements in Internet technologies trigger development of personal computers (PCs) capable of processing multimedia. For instance, video object data or audio data may be inserted into a document with HyperText Markup Language (HTML) or may be reproduced during reproduction of HTML. In this case, the navigation data is described with a script language or the like. Therefore, the navigation data may be described separate from reproduction data. If there are two types of navigation data, e.g., one controlled using script language and another one described in the table format, it is complicated to control both types of navigation data.

### Disclosure of the Invention

According to an aspect of the present invention, there is provided a data storage medium and a data reproduction apparatus. Assuming that the data reproduction apparatus operates as specified in the present invention, a recording apparatus records information, according to the data structure of which is specified in the present invention, and multimedia data on a storage medium. Here, storing operations are understood as identical to recording operations.

Multimedia data and additional data are recorded in a storage medium, according to an aspect of the present invention. The present invention suggests separate recording of two different types of additional data: additional information regarding record units, attributes, and reproduction units of the multimedia data, and navigation information regarding selection of a reproduction unit and a reproduction sequence. The additional information regarding a record unit, attributes, or a reproduction unit, with respect to multimedia data, is described using a markup language. Accordingly, implementation supporting an extension of a future standard is possible even when adding a new type of multimedia data or prescribing a new type of recording or reproduction unit, regardless of the standard adopted. Alternatively, the additional information may be stored in a binary table format.

Also, both or one of a markup language and a script language may be used to describe navigation data, which represents selection of a reproduction unit or reproduction sequence. A markup language is also used to describe presentation data, which represents a menu screen to select a reproduction unit and a screen layout for data reproduction, thereby enabling a menu structure and navigation with a high degree of flexibility.

According to an aspect of the present invention, there is provided a multimedia data storage medium in which multimedia data is stored. The multimedia data storage medium includes a first layer in which the multimedia data, such as video object images, still images, voice, graphics, and texts, is stored; and a second layer in which, when the multimedia data is divided into the recording unit and the reproduction unit, information regarding attributes of the record unit and relationship between the record unit and the reproduction unit are described with the markup language using elements and the attributes.

The navigation data, which is used to control a selection of the reproduction unit and the reproduction sequence, may be recorded on a third layer using the markup language or the script language, in addition to the information recorded on the first and second layers.

Additional aspects and/or advantages of the invention will be set forth in part in the description which follows and, in part, will be obvious from the description, or may be learned by practice of the invention.

### Brief Description of the Drawings

The above and/or other aspects and advantages of the present invention will become more apparent by describing in detail a preferred embodiment thereof with reference to the attached drawings in which:
FIG. 1 illustrates a conventional multimedia data recording/reproducing apparatus;
FIG. 2 illustrates a data structure of a conventional DVD;
FIG. 3 illustrates a VMG area;
FIG. 4 illustrates a VTS area;
FIG. 5 illustrates a reproduction unit one_sequential_PGC_title, including only a single PGC;
FIG. 6 illustrates the reproduction unit in which a title is linked to a plurality of PGCs;
FIG. 7 illustrates a structure of the PGC;
FIG. 8 illustrates a case of branching a new PGC using command navigation information during or after reproduction of the PGC;
FIG. 9 illustrates a data structure of a TT_SRPT information table;
FIG. 10 illustrates a data structure of VTS_PTT_SRPT information in a VTSI;
FIG. 11 illustrates contents of a PTT_SRP, designating the PGC and a program in the PGC;
FIG. 12 illustrates a data structure of a PGCIT VTS_PGCIT, representing a PGCI table in the VTSI;
FIG. 13 illustrates a detailed data structure of a VTS_PGCI;
FIG. 14 illustrates a file1.mpg and a file2.mpg, in accordance with an aspect of the present invention;
FIG. 15 illustrates two video object clips, in accordance with an aspect of the present invention;
FIG. 16 illustrates a position of video object data at a time gap position recorded in a table format, in accordance with an aspect of the present invention;
FIG. 17 illustrates a video object file, in accordance with an aspect of the present invention;
FIG. 18 illustrates the reproducing apparatus, in accordance with an aspect of the present invention; and
FIG. 19 illustrates a method of forming a menu screen for navigation, in accordance with an aspect of the present invention.

### Best mode for carrying out the Invention

Reference will now be made in detail to the present aspects of the present invention, examples of which are illustrated in the accompanying drawings, wherein like reference numerals refer to the like elements throughout. The aspects are described below in order to explain the present invention by referring to the figures.

According to an aspect of the present invention, a storage medium on which a video object title is recorded, being supported by a plurality of voice types and subtitles. Additional information may be hierarchically recorded and a markup language is used to implement each layer for extensibility. The markup language, which describes record units and reproduction units, is called a media description language.

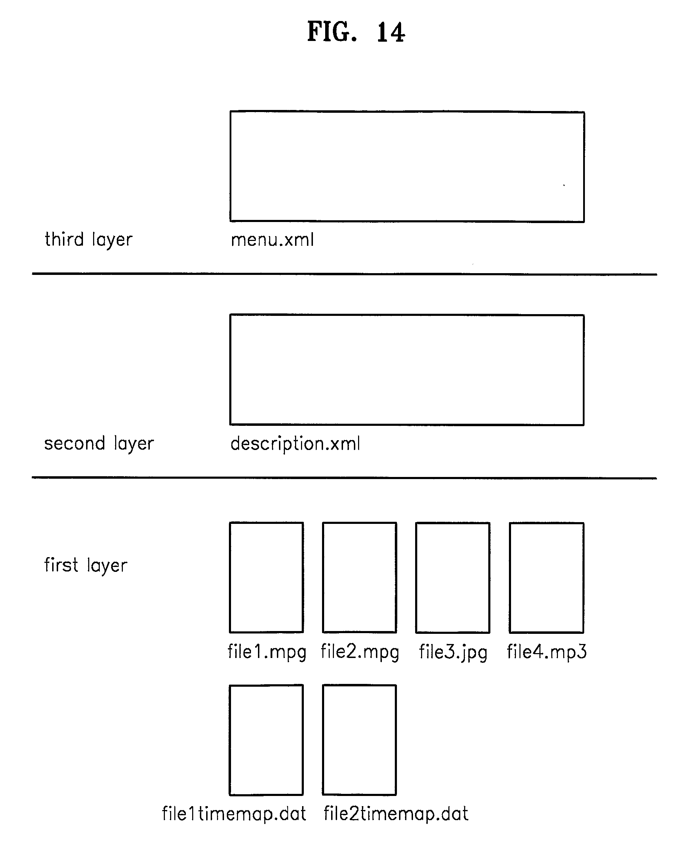

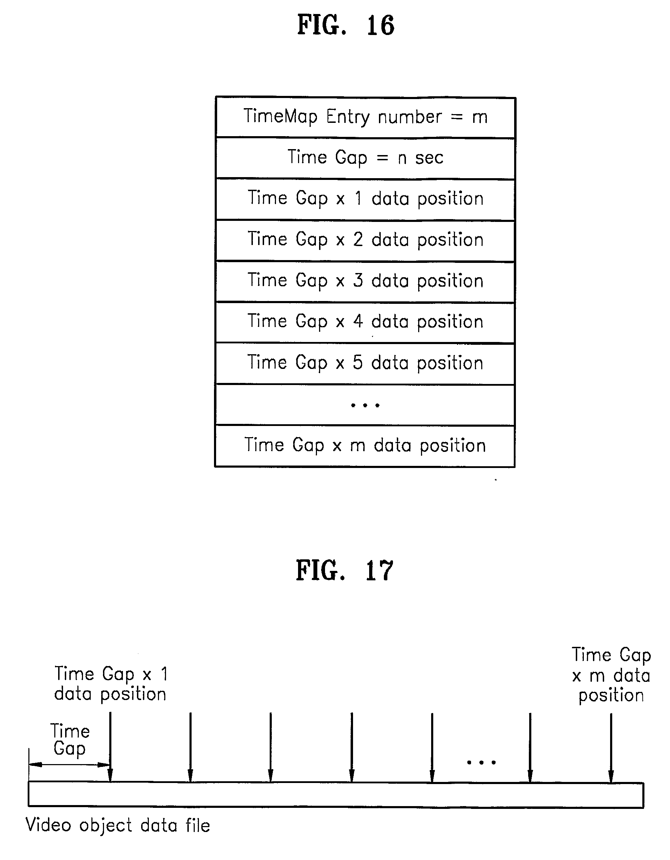

Referring to FIG. 14, file1.mpg, which is a first half of data representing a video object title, and file2.mpg, which is the other half, are recorded in a first layer. A title may be divided into a plurality of files given a size limit of a chapter unit or a file. Video object data is compressively encoded to reduce a data amount thereof. MPEG, which is one of the most popular motion picture compression methods, supports a variable bit rate (VBR) encoding method in which a bit rate per hour varies according to an amount of video information. A time search determining a starting point of the data reproduction with consideration to a given time requires table-type information to map the time and a position of the data. The information is used to detect the position of desired data since a predetermined time after a start of the data reproduction. In general, the table-type information includes information regarding data positions measured at every predetermined point of time. For instance, the table-type information may be time map information that represents temporal position linking information indicating the data positions measured with respect to the file beginning every 10 seconds. However, because the amount of time map information is significant, the information is recorded in a binary table format, rather than using the markup language, and stored in the first layer. FIG. 14 illustrates the time map information file1timemap.dat and file2timemap.dat, regarding the video object data file1.mpg and file2.mpg, respectively. According to an aspect of the present invention, actual time map information is illustrated in FIG. 16.

Additional data, regarding multimedia data recorded on the first layer, is recorded on a second layer. The additional data defines a reproduction unit to appropriately reproduce the multimedia data on the first layer. Here, the reproduction unit may be divided into record units or units of storage, which are described in a binary table format, or in an alternative aspect of the present invention, using the markup language, and stored as a description.xml file. Navigation information, which is to be added to the additional data, is recorded on a third layer as a menu.xml file. The stored navigation information determines a selection and sequences of the data reproduction by controlling the reproduction unit recorded on the second layer.

In general, a menu screen is organized in a recording medium, on which a plurality of titles or chapters are recorded, to allow random access of a particular title or chapter in a user selection and immediate reproduction at a specified position. In the menu screen, still images and buttons are generally formed. Also, background music may be reproduced. When a user selects a button, a function associated with the button is executed. Referring to FIG. 14, the still images and music data included in the menu screen are recorded as file3.jpg and file4.mp3 files on the first layer.

The additional data recorded on the second layer describes the information regarding the data recorded on the first layer. Video object data is multiplexed in a data stream to synchronize video, audio, and graphic data. The attributes of the record units of the video object data are described as description.xml, using the attributes of the video, audio, and graphic data, and numbers of audio, video, and graphic data. Further, the additional data provides information regarding reproduction units that are generated by a combination or a selection of the record units.

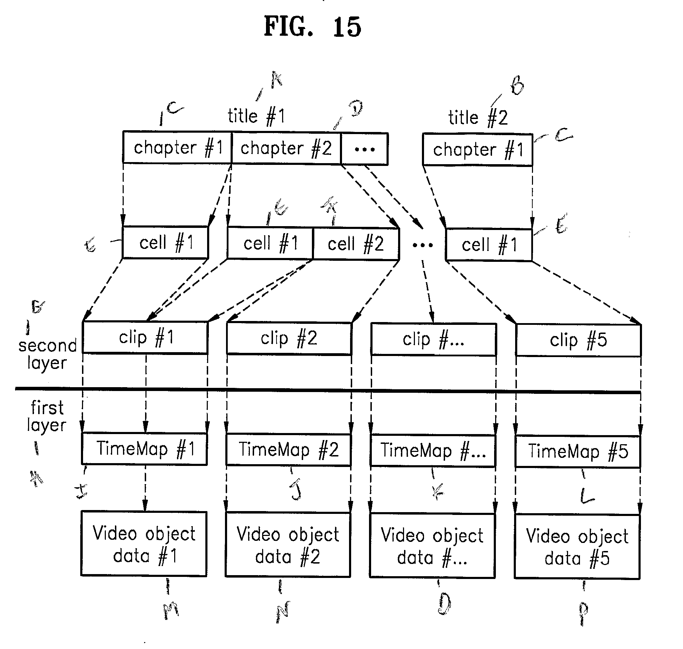

In an aspect of the present invention, a 'clip' is used as the record unit and 'cells', 'chapters', and 'titles' are used as the reproduction units. The following description provides explanations on these units (see FIG. 15): clip: The clip is an object described in relation to the recording of the multimedia data. FIG. 15 illustrates two video object clips. The video object clip has information about the time and the position. The data belonging to the clip can be continuously reproduced. That is, an mpg file including the video object data and a time map file including the temporal position information are combined to form the clip. The time map file includes the additional information that enables a quick search for a desired temporal position of the video object data when the video object is VBR encoded.

That is, if the video object file is the VBR encoded as shown in FIG. 17, the position of the video object data at a time gap position, designated by predetermined time intervals from a starting position, is recorded in the table format shown in FIG. 16. If the data position in the table is called an entry, a total number of entries and time gaps may be recorded at a beginning of the table. A search of a desired position of the data, with respect to a predetermined instant of time, can be accomplished by detecting the time gap position most proximate to a predetermined instant of time recorded in the table. The desired data may be precisely reproduced by reading the data starting from the detected position. If the data is recorded at a constant bit rate (CBR), it is possible to maintain the coded data amount generated for a predetermined time. In this case, the clip can be constructed with only video object data because it is possible to detect the desired position of the data using the time calculations according to the CBR without the time map information.

The following information is used to define the video object clip including the video data, a plurality of audio data groups, and a plurality of graphic data groups:
(a) general attributes: clip identification information, video object clip files, and clip temporal position information file (time map file);
(b) video: screen size (e.g., 1920'1080, 1280'720, and 720'480), average bit rate (e.g., 4M, 6M, 10M, and 20M), screen output rate (e.g., 60Hz, 30Hz, and 24Hz), scanning types (e.g., progressive and interlaced types);
(c) audio: audio stream identification information, audio encoding information, linguistic attributes of each audio data group (e.g., Korean, and English), and application attributes of each audio data group (e.g., main audio, sub audio, and commentary); and
(d) graphic: graphic stream identification information, graphic encoding information, linguistic attributes of each graphic data group (e.g., Korean, and English), application attributes of each graphic data group (e.g., subtitles, and animation)

The above information, however, may be changed according to the recording type, encoding type, and multiplexing type of the multimedia data. Also, the record unit may form a hierarchical structure, and, thus, the record unit subordinate to the clip may be present. For convenience, according to an aspect of the present invention, the record unit is determined to be made of clips.

In general, the reproduction unit has the hierarchical structure, that is, the reproduction unit includes a plurality of reproduction sub-units. In this case, the reproduction sub-unit is defined as a unit of a reproduction sequence or a point of random access.

Referring to FIG. 15, a cell is the reproduction unit that is described in relation to the reproduction of the multimedia data, each cell designating the clip or a portion of the clip. The cell represents a lowest layer of the reproduction unit. That is, the cell, i.e., a reproduction unit, is linked to at least one clip, i.e., the record unit, in the reproduction of the multimedia data.

The cell is defined using the identification information, and the starting and ending times of the related clip. However, if the cell designates an entire clip, not a portion thereof, the starting and ending times are not additionally specified.

Referring to FIG. 15, a chapter is the reproduction unit described in relation to the reproduction of the data, each chapter including at least one cell. In general, the chapter is defined by a chapter name, chapter identification information, and information regarding at least one cell belonging to the chapter.

According to an aspect of the present invention, the chapter can be understood as a reproduction point that allows the user to perform the random access. Thus, within the title, the user can search for or reproduce the desired data in units of chapters. In general, the menu screen provides a menu in which the desired data can be selected in the units of chapters.

Referring to FIG. 15, a title includes a plurality of chapters. A plurality of titles may be stored in a storage medium and can be sequentially reproduced according to a sequence of title identification signs. In general, the menu screen provides a menu that allows selection of the title, the title defined by a title name, a title identification sign, and information regarding at least one chapter belonging to the title.

FIG. 15 illustrates a relationship between video object data recorded on the first layer, and clips, chapters, and titles recorded on the second layer.

According to an aspect of the present invention, the information regarding the second layer is described in two types of units, i.e., the record units and the reproduction units, while the data regarding the navigation is eliminated. In general, the data is described in a binary table format or through the markup language. In an aspect of the present invention, the data is described using the markup language because the markup language is more advantageous than the binary table. Extensible markup language (XML), a representative example of the markup language, is defined in W3C, which prescribes recommendations for the Internet. With XML, it is possible to describe a variety of databases and documents. When information regarding the second layer is described with XML, it is very easy to ensure extendibility and backward compatibility.

Hereinafter, the XML-based language will be defined describing the additional information to be stored in the second layer, according to an aspect of the present invention. The XML-based language is referred to as media description language (MDL). XML is described with a combination of hierarchical elements. Also, each element may have several attributes. The name of the element is described within a sign '<>'. The regulations to describe a sub element are mentioned below.

The MDL, according to an aspect of the present invention, has elements and attributes as described below. Here, a document is understood as a unit of data that is described and stored utilizing the markup language.
(a) The uppermost element of the MDL document is described using <mdl> or an equivalent value.
(b) The element <mdl> may have the following sub-elements:
   - <head>
   - <body>
(c) An element <head> contains all information regarding a storage unit and may have the following sub-element:
   - <meta>
(d) An element <meta> defines a blank element in which features of a document are defined and appropriate values are allocated to the features. Each <meta> element denotes a pair including an attribute and a value.
   The attributes of elements defined in the element <meta> are as follows:
   - Name: A name denotes a document feature defined in the element <meta>. The name is an attribute indispensable to the element
      <meta>.
   - Content: A content denotes a feature value defined in the element <meta>. The content is also an attribute indispensable to the element
      <meta>.
   The following are examples of the element <meta> excluding conventional examples of the element <meta>: e.g., (i) <meta name="type" content="mdl-disc" />, which describes a disc that is manufactured using the media description language; and (ii) <meta name="region" content="1" " />, which indicates that the regional code of the disc is 1.
(e) The element <body> may have the following sub-elements:
   - <clip>, and
   - <title>
(f) The element <clip> may have the following attributes:
   - Id: representing the identification information for each clip. Id varies according to the type of storage medium (e.g., 1, 2, or 3),
   - src: representing a video object data file such as 'file1.mpg', and
   - tmap_src: representing a file containing a time map table (e.g., file1timemap.dat)
      The element <clip> may have the following sub-elements:

   - <video>,
   - <audio>, and
   - <graphic>
(g) The element <video> may have the following attributes:
   - resolution: image sizes in vertical and horizontal directions, e.g., 1920'1080, or 1280'720,
   - frame_rate: a number of frames output per second, e.g., 60, 30, 24, or 50,
   - scanning: indicating whether an image is sequentially scanned or not, i.e., whether the image is progressively scanned or interlaced scanned,
   - bit_rate: average bit rate, e.g., vbr, 4m, 6m, 8m, 10m, or 20m, and
   - stream_id: stream id of an MPEG PES stream, e.g., 0xe0
(h) The element <audio> may have the following attributes:
   - encoding: representing an encoding method, e.g., mp1, mp2, mp3, ac3, Ipcm, or dts,
   - sampling_rate: sampling rate, e.g., 48k, 96k, or 192k,
   - quantization_bit: a number of quantized bits, e.g., 16, or 24,
   - bit_rate: an encoded bit rate, e.g., vbr, 128k, or 384k,
   - channel_no: a total number of channels, e.g., 2, 5, or 7,
   - language: linguistic attributes, e.g., none, en, ko, jp, or fr,
   - application: usage of an audio stream, e.g., main, sub, or commentary,
   - stream_id: stream ID of an MPEG PES stream, e.g., 0xc0, or 0xbd, and
   - sub_stream_id: sub stream ID of an MPEG PES stream, e.g., none, 0x80,or 0xa0.
(i) The element <graphic> may have the following attributes:
   - encoding: representing the encoding method, e.g., dvd_subpicture,
   - application: usage of s-graphic stream, e.g., animation or sub_title,
   - language: linguistic attributes, e.g., none, en, ko, jp, or fr,
   - stream_id: Stream ID on an MPEG PES stream, e.g., 0xBD, and
   - sub_stream_id: Sub stream ID on an MPEG PES stream, e.g., 0x20.
(k) The element <title> may have the following attributes:
   - name: title name, e.g., White Snow,
   - Id: title identification information that varies according to the type of storage medium, e.g., 1, 2, or 3.
   Also, the element <title> may have the following sub elements:
   - <chapter>.
(l) The element <chapter> may have the following attributes:
   - name: chapter name, e.g., Dwarf, and
   - Id: chapter identification information that varies according to a title, e.g., 1, 2, or 3.
   Also, the element <chapter> may have the following sub-element:
   - <cell>.
(m) The element <cell> may have the following attributes:
   - clip_id: identification number of a clip to which the cell is linked,
   - start_time: starting time in a clip clip_id, and
   - end_time: ending time in a clip clip_id.

A summary of the above attributes and elements is shown in Table 1.

**Table 1**

| Element | Attribute | Sub Element |
|---|---|---|
| <mdl> | | <head>/<body> |
| <head> | | <meta>* |

| <meta> | name, content | EMPTY |
|---|---|---|
| <body> | | <clip>+/<title>+ |
| <clip> | id, src, tmap src | <video>/<audio>*/<graphic>* |
| <video> | resolution, frame_rate, | |
| | scanning, bit rate, stream id | EMPTY |
| <audio> | encoding, sampling_rate, | |
| | quantization_bit, bit_rate, | |
| | channel_no, language, | EMPTY |
| | application, stream_id, | |
| | sub stream_id | |
| <graphic> | encoding, application, | |
| | language, stream_id, | EMPTY |
| | sub stream_id | |
| <title> | name, id | <chapter>+ |
| <chapter> | name, id | <cell>+ |
| <cell> | clip_id, start_time, end time | EMPTY |

The additional data of FIG. 15, according to a preferred embodiment of the present invention, may be described using the above elements and attributes, as follows:

```
 <?xml version="1.0"?>
 <!DOCTYPE mdl
   PUBLIC "http://mdl-disc.org/mdl1/mdl.dtd">
 <mdl>
 <head>
       <meta name="type" content="mdl-disc" />
       <meta name="title" content="White Snow Special" />
       <meta name="region" content="1" />
 </head>
 <body>
       <clip id="1" src="file1.mpg" tmap_src="file1tmap.dat">
       <video resolution="1920x1080" frame_rate="24"
                                 scanning="progressive" bit_rate="vbr"
 stream_id="0xe0" />
       <audio encoding="ac3" sampling_rate="48k"
 quantization_bit="16"
       bit_rate="384k" channel_no="5" language="en"
 application="main" stream_id="0xbd" sub_stream_id="0x80" />
              <audio encoding="ac3" sampling_rate="48k"
 quantization_bit="24"
       bit_rate="384k" channel_no="5" language="ko"
                                          application="main"
 stream_id="0xbd" sub_stream_id="0x81" />
              <audio encoding="ac3" sampling_rate="48k"
 quantization_bit="24"
       bit_rate="384k" channel_no="5" language="jp"
 application="main" stream_id="0xbd" sub_stream_id="0x84" />
              <audio encoding="mp1" sampling_rate="48k"
 quantization_bit="16"
       bit_rate="384k" channel_no="2" language="en"
 application="commentary" stream_id="0xc0"
                            sub_stream_id="none" />
                     <graphic encoding="dvd_subpicture"
 application="sub_title"
       language="en" stream_id="0xbd" sub_stream_id="0x20" />
                     <graphic encoding="dvd_subpicture"
 application="sub_title"
       language="ko" stream_id="0xbd" sub_stream_id="0x21" />
                     <graphic encoding="dvd_subpicture"
 application="sub_title"
       language="jp" stream_id="0xbd" sub_stream_id="0x22" />
       </clip>
       <clip id="5" src="file5.mpg" tmap_src="filek5map.dat">
              <video resolution="1920x1080" frame_rate="24"
                                             scanning="progressive"
 bit_rate="vbr" stream_id="0xe0" />
              <audio encoding="ac3" sampling_rate="48k"
 quantization_bit="16"
      bit_rate="384k" channel_no="5" language="en"
 application="main" stream_id="0xbd" sub_stream_id="0x80" />
              <audio encoding="mp1" sampling_rate="48k"
 quantization_bit="16"
      bit_rate="384k" channel_no="2" language="en"
 application="commentary" stream_id="0xbd"
                           sub_stream_id="0x83" />
      </clip>
      <title id="1" name="White Snow">
      <chapter id="1" name="Mirror">
             <cell clip_id="1" start_time="0:00:00"
 end_time="0:05:00"/>
              </chapter>
              <chapter id="2" name="7 Dwarves">
                     <cell clip_id="1" start_time="0:05:00"
 end_time="0:20:00"/>
                     <cell clip_id="2" start_time="0:00:00"
 end_time="1:00:00"/>
              </chapter>
       </title>
       <title id="2" name="White Snow Supplementary">
              <chapter id="1" name="How to make Snow White">
                     <cell clip_id="5" start_time="0:00:00"
 end_time="0:20:00"/>
              </chapter>
       </title>
      </body>
      </mdl>
```

In an aspect of the present invention, actual video object data includes five clips represented in the record units, and two titles represented in the reproduction units.

In the case of the VBR video object data, the clip is described as time position information data, which includes a portion of time map information. Thus, in an aspect according to the present invention, each clip is described using the two attributes src and tmap_src, such that the clip data and the titles are linked to each other. In addition, each clip includes many attributes of video, audio, and graphic data, and is referred to prior to the data reproduction.

Title 1 is a subject title including a plurality of chapters. The first chapter includes a cell linked to a portion of a clip #1. Thus, only the portion of the clip #1 is reproduced during the reproduction of the first chapter. The second chapter includes two cells. The first cell designates the reproduction of the data after time 0:05:00 of the clip #1. Accordingly, in order to start the reproduction from the second chapter, the position of desired data must be detected using the time map information, specifically, the time position information regarding clip #1.

As shown in a corresponding title name attribute, title 2 includes an additional image, i.e., a supplementary image. The title 2 is recorded as clip #5.

As mentioned above, improved extensibility can be achieved by describing the information regarding the second layer using the markup language. In other words, an information structure of a new concept can be described using new elements or attributes. Then, the existing reproducing apparatuses can reproduce the data using the existing information rather than newly generated information. That is, it is possible to maintain the reproduction of the data regarding the existing element using a conventional reproducing apparatus. Assuming that a new element <bookmark> is added to the <title> element and the following information is recorded on the second layer:

```
 <title id="1"... >
 <bookmark point="1:00:00" />
 <chapter id="1 "..>
 </title>
```

The element <bookmark> is an information structure that is newly defined to allow a direct access to a particular position of the title. When the storage medium, on which the element <bookmark> is recorded, is inserted into the conventional reproducing apparatus, it is possible to reproduce the data recorded on the storage medium using the title and the chapter information. However, the bookmark

information is ignored because the bookmark information cannot be reproduced using the conventional reproducing apparatus.

As mentioned above, the multimedia data can be reproduced using only the data recorded on the first and second layers. In this case, the reproducing apparatus reads the information recorded on the second layer, and determines the format of recorded data recorded, the title, and the number of chapters belonging to each title. Next, the reproducing apparatus informs the user of the detection result through an appropriate user interface, receives a user input, and reproduces the desired reproduction unit. The user interface includes a user output device 300 and a user input device 400 as shown in FIG. 1. In detail, the user output device 300 is an apparatus, such as a television (TV), that outputs multimedia data, and the user input device 400 is an apparatus, such as a remote control, that receives a user input. The user interface, according to an aspect of the present invention, includes a chapter menu in a menu screen, which allows selection of the chapters belonging to each title. The user selects a title number or a chapter number from each menu using the remote control 400, resulting in the detection and the reproduction of a desired reproduction unit.

The storage medium 100, according to an aspect of the present invention, further includes navigation information recorded on a third layer. The navigation information, allowing for navigation control, which is similar to a conventional menu, includes a selection using the user input device 400, such as the remote control and reproduction of the reproduction unit 200 to a user output device, such as a TV. Also, the navigation information may include the control of the following data reproduction using a current state of the data reproduction. Here, the recording apparatus is as shown in FIG. 1, which can control the recording on the first, second and third layers of the storage medium 100. Also, the sequences of the data reproduction may be determined differently. For instance, a parental level control may be performed during the data reproduction, that is, the sequences of the data reproduction may be determined depending on whether the user is an adult or a juvenile.

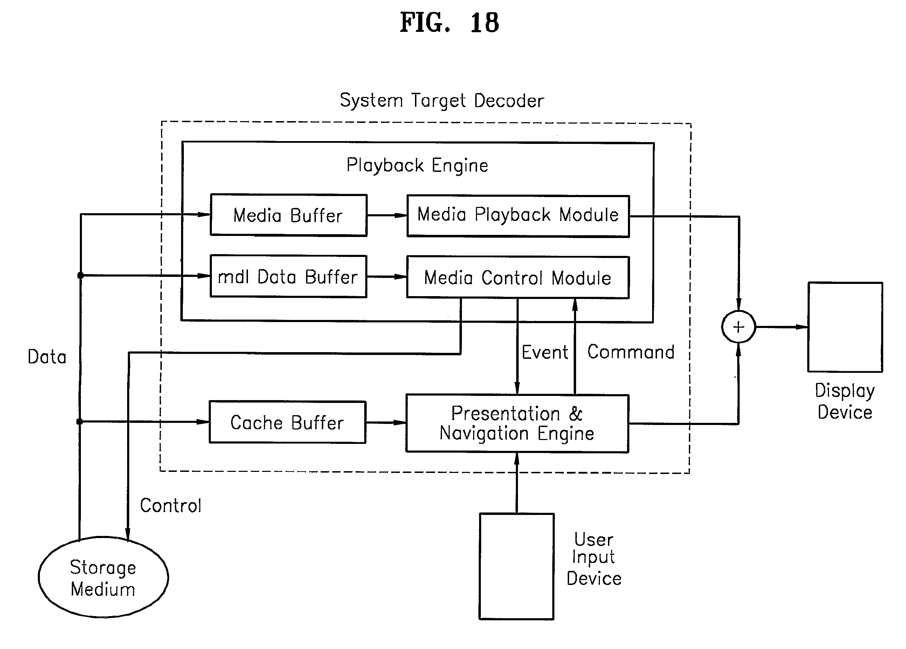

To this end, the reproducing apparatus 200 may be manufactured as shown in FIG. 18. Referring to FIG. 18, a playback engine denotes a block to process the data recorded on the first and second layers of the storage medium. The controller, comprising the playback engine and the presentation and navigation engine, controls reproduction of the navigation data on the third layer of the storage medium. If the storage medium does not contain the data in the third layer, a presentation and navigation engine of FIG. 18 converts the user input into an Application Program Interface (API), which can be recognized by the playback engine, and provides the API to the playback engine. If the user input is key input and recognized by the playback engine, the user input is directly transmitted to the playback engine.

The data recorded on the third layer includes presentation data, which is used to arrange the menu screen or the reproduction unit in the screen, and the navigation data, which is used to select the reproduction unit in response to the user input or the control data reproduction, according to a state of a certain playback engine. The presentation data, according to an aspect of the present invention, is described using HyperText Markup Language (html) or Extensible HyperText Markup Language (xhtml). Also, the navigation data may be described with a Script language or a markup language capable of describing timing and synchronizing. A typical example of the Script language is Java script that is interpreted and executed in units of lines, and a typical example of the markup language having timing and sync definitions is synchronized markup interface language (SMIL).

The navigation engine performs navigation by controlling the reproduction unit recorded on the second layer, according to the user's selection or an event generated by the playback engine.

The following describes methods of laying out reproduction units, recorded on the second layer, in a screen using XHTML and JavaScript, and controlling navigation, according to an aspect of the present invention.

An example of controlling navigation with a markup document, which allows the user input key to be directly transmitted to the playback engine, is as follows:
- Markup Document 1

```
 <?xml version="1.0" encoding="UTF-8"?>
 <!DOCTYPE html
      PUBLIC "-//W3C//DTD XHTML 1.0 Strict//EN">
 <html xmlns"http://www.w3.org/1999/xhtml" xml:lang="en" lang="en">
  <head>
    <title>White Snow</title>
    <meta name="Default_audio" content="0x80" />
    <meta name="Default_subtitle" content="0x20" />
    <script type="text/javascript">
   function RcKeyEventHandler(evt)
   {
       if(evt.keyCode == 10)
          MDLvideo.InputRCKey(10);
       if(evt.keyCode == 11)
          MDLvideo.InputRCKey(11);
       if(evt.keyCode == 12)
          MDLvideo.InputRCKey(12);
       if(evt.keyCode == 13)
          MDLvideo.InputRCKey(13);
      if(evt.keyCode == 14)
          MDLvideo.InputRCKey(14);
      if(evt.keyCode == 15)
          MDLvideo.InputRCKey(15);
      if(evt.keyCode == 16)
          MDLvideo.InputRCKey(16);
      if(evt.keyCode == 17)
          MDLvideo.InputRCKey(17);
      if(evt.keyCode == 18)
          MDLvideo.InputRCKey(18);
   }
 </script>
 <script type="text/javascript">
 function setupEventHandler()
 {
 bodyNode.addEventListener("rckeypress",RcKeyEventHandler,true);
 }
 </script>
     </head>
     <body id="bodyNode" onload="setupEventHandler()">
     <object data="MDLvideo;" />
  </body>
 </html>
```

A key event interface of a user input device is as follows:
interface RCKeyEvent: UIEvent {
const unsigned long VK_0 = 0; // keyCode is "0", keyName is "0"
const unsigned long VK_1 = 1; // "1"
const unsigned long VK_2 = 2; // "2"
const unsigned long VK_3 = 3; // "3"
const unsigned long VK_4 = 4; // "4"
const unsigned long VK_5 = 5; // "5"
const unsigned long VK_6 = 6; // "6"
const unsigned long VK_7 = 7; // "7"
const unsigned long VK_8 = 8; // "8"
const unsigned long VK_9 = 9; // "9"
const unsigned long VK_PLAY_PAUSE = 10; // "PlayPause"
const unsigned long VK_STOP = 11; // "Stop"
const unsigned long VK_FF = 12; // "FastForward"
const unsigned long VK_FR = 13; // "FastRewind"
const unsigned long VK_SKIP_PREV = 14; // "Prev"
const unsigned long VK_SKIP_NEXT = 15; // "Next"
const unsigned long VK_SUBTITLE = 16; // "Subtitle"
const unsigned long VK_AUDIO = 17; // "Audio"
const unsigned long VK_MENU = 18; // "Menu"
const unsigned long VK_UP = 19; // "Up"
const unsigned long VK_LEFT = 20; // "Left"
const unsigned long VK_RIGHT = 21; // "Right"
const unsigned long VK_DOWN = 22; // "Down"
const unsigned long VK_OK = 23; // "OK"
const unsigned long VK_RETURN = 24; // "Return"
const unsigned long VK_EXIT = 25; // "Exit"
   readonly attribute unsigned long keyCode;
   readonly attribute DOMString keyName;
   void initRCKeyEvent (in DOMString typeArg,
   in boolean canBubbleArg,
   in boolean cancelableArg,
   in unsigned long keyCode,
   in unsigned long keyName);
   }

The above examples of the markup document reveals that "Markup Document 1" primarily includes layout information, which is related to a video object displayed by the markup document, and a script, which is used to control the reproduction data recorded on the second layer in response to the user input. Also, the key event interface of the user input device defines an interface that allows key values, used in the user input device, to be used in a document object model (DOM).

First, the above example of the markup document includes sequentially a declaration that enables the use of the XHTML and an element <head>, in which the element <title>, the element <meta>, and the element <script> are included. In general, the element <title> represents the title subject of the markup document, and the element <meta> indicates default audio and subtitles in the video object, which is reproduced in the markup document.

Also, event registration information according to the user input is described using JavaScript language, as follows:

```
 <script type="text/javascript">
 function setupEventHandler()
 {
 bodyNode.addEventListener("rckeypress",RcKeyEventHandler,true);
 }
 </script>
```

The event registration information indicates that a function RcKeyEventHandler is called when an event rckeypress occurs, i.e., the user presses a key of the user input device 400.

Also, event processing information is described using the JavaScript language as follows:

```
 <script type="text/javascript">
   function RcKeyEventHandler(evt)
   {
       if(evt.keyCode == 10)
          MDLvideo.InputRCKey(10);
       if(evt.keyCode == 11)
          MDLvideo.InputRCKey(11);
       if(evt.keyCode == 12)
          MDLvideo.InputRCKey(12);
       if(evt.keyCode == 13)
          MDLvideo.InputRCKey(13);
       if(evt.keyCode == 14)
          MDLvideo.InputRCKey(14);
       if(evt.keyCode == 15)
          MDLvideo.InputRCKey(15);
       if(evt.keyCode == 16)
          MDLvideo.InputRCKey(16);
       if(evt.keyCode == 17)
          MDLvideo.InputRCKey(17);
       if(evt.keyCode == 18)
          MDLvideo.InputRCKey(18);
   }
 </script>
```

The event processing information indicates that MDLvideo. InputRCKey(10) is executed when a key code RcKeyEventHandler is 10. Here, the object MDLvideo performs data reproduction using the additional data stored in the second layer, that is, the object MDLvideo corresponds to the playback engine. In other words, if a code allocated to a key is 10 and the user presses the key, the presentation and navigation engine of FIG. 18 sends a control command to the playback engine using a command API MDLvideo.InputRCKey. In response to the control command, the playback engine performs the reproduction control operation allocated to the key code 10, i.e., reproduces or temporarily stops the reproduction of a video object.

The object MDLvideo is embedded in the element <body> of the markup document using the element <object>. Meanwhile, it is possible to embed a plurality of objects in the element <body> of the markup document. In this case, a layout of the markup document may use cascading style sheet (CSS).

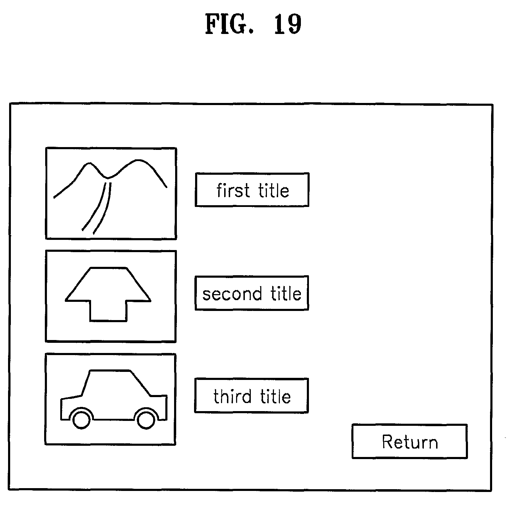

Next, a method of providing a specific functional command to the playback engine and performing navigation will be described. FIG. 19 illustrates a method of forming the menu screen for the navigation.

Image and text data are described as presentation data to display on the screen. In accordance with an aspect of the present invention, the screen may include the text data described with XHTML, or image data recorded on the first layer. Referring to FIG. 19, four buttons, i.e., title 1, title 2, title 3, and return, are displayed on the screen. The image or the text data forming the four buttons is described using XHTML. In the screen, the user can select and press one of the buttons. More specifically, the user applies directional keys of the user input device to select one of the buttons and applies an OK key to press the selected button. Alternatively, the screen may be constructed such that a certain operation may be executed when the user presses a certain button using the keys of the user input device as access keys. When the user selects one of the buttons, the selected button is highlighted. The above functions are provided by a presentation module of the presentation and navigation engine. In accordance with an aspect of the present invention, the presentation module may be an XHTML browser. If the user presses one button, the operation connected to the button is performed.

Likewise, a command may be provided to the playback engine to reproduce multimedia data using the data recorded on the first and second layers. That is, the presentation and navigation engine may provide the playback engine with the command for controlling the reproduction unit recorded on the second layer.
- Markup Document 2

```
 <?xml version="1.0" encoding="UTF-8"?>
 <!DOCTYPE html
     PUBLIC "-//W3C//DTD XHTML 1.0 Strict//EN">
 <html xmlns="http://www.w3.org/1999/xhtml" xml:lang="en" lang="en">
  <head>
    <title>White Snow</title>
    <meta name="Default_audio" content=0x80" />
    <meta name="Default_subtitle" content="0x20" />
     </head>
     <body>
     <table>
        <tr>
         <td><img src="file1.jpg" alt="title1"/></td>
         <td><button type="button" name="title 1"
 onclick="MDLvideo.playTitle(1)"/></td>
        </tr>
        <tr>
         <td><img src="file2.jpg" alt="title2"/></td>
         <td><button type="button" name="title 2"
 onclick="MDLvideo.playTitle(2)"/></td>
        </tr>
        <tr>
         <td><img src="file3.jpg" alt="title3"/></td>
         <td><button type="button" name="title 3"
 onclick="MDLvideo.playTitle(3)"/></td>
        </tr>
        <tr>
         <td><button type="button" name="Return"
 onclick="MDLvideo.play()"/></td>
        </tr>
  </body>
 </html>
```

The Markup Document 2 represents the menu screen illustrated in FIG. 19. Referring to the Markup Document 2, commands to control the reproduction units recorded on the second layer are described in an 'onclick' event of each button. When a button to reproduce title 1 is clicked, a command MDLvideo.playTitle(1) is sent to the navigation engine. Then, the navigation engine provides the commands and parameters to the playback engine for reproduction of corresponding data. For instance, playTitle is a title reproduction parameter that indicates title number. A function to provide such a command is called a method.

Examples of the method are as follows:

```
 method for an object MDLvideo {
 playTitle(title_no): reproduce data starting from a title indicated in
 title_no.
          playTime(time): reproduce data starting from indicated time.
          pause(): pause data reproduction
          stop(): stop data reproduction
  play(): start data reproduction
          forward_scan(speed): high-speed forward data reproduction at
 a speed indicated in (speed)
          backward_scan(speed): high-speed backward data
 reproduction at a speed indicated in (speed)
          playChapter(chapter_no): when chapter_no == 0, move to
 chapter having the largest chapter ID and reproduce data of the chapter.
  If chapter_no > Maximum chapter ID, move to a chapter having the
 smallest chapter ID and reproduce data of the chapter.
 }
```

If specific conditions required by the playback engine are satisfied, an event to process the data recorded on the third layer is generated in the presentation and navigation engine. For instance, whenever a chapter begins, the event is generated and provided to the presentation and navigation engine, and then, the presentation engine displays a start of the chapter in the screen. The information regarding the event that is provided to the presentation and navigation engine and registered to the playback engine may also be recorded on the third layer.
- Markup Document 3

```
 <smil>
   <head>
     <meta name="title" content="White Snow"/>
     <meta name="Default_audio" content="0x80" />
     <meta name="Default_subtitle" content="0x20" />
     <layout>
       <root-layout width="1920" height="1080"/>
       <region id="img_scene1" top="45" left="30" width="600"
 height="300"/>
       <region id="img_scene2" top="390" left="30" width="600"
 height="300"/>
       <region id="img_scene3" top="735" left="30" width="600"
 height="300"/>
       <region id="img_title-button1" top="95" left="660" width="600"
 height="200"/>
       <region id="img_title_button2" top="440" left="660" width="600"
 height="200"/>
       <region id="img_title_button3" top="785" left="660" width="600"
 height="200"/>
       <region id="img_return" top="885" left="1290" width="600"
 height="150"/>
     </layout>
  </head>
  <body>
    <par>
      <img src="file1.jpg" region="img_scene1"/>
      <img src="file2.jpg" region="img_scene2"/>
      <img src="file3.jpg" region="img_scene3"/>
      <img src="file4.jpg?url=command:MDLvideo.playTitle(1)"
 region="img_title_button1"/>
      <img src="file5.jpg?url=command:MDLvideo.playTitle(2)"
 region"img_title_button2"/>
      <img src="file6.jpg?url=command:MDLvideo.playTitle(3)"
 region="img_title_button3"/>
      <img src="file7.jpg?url=command:MDLvideo.play()"
 region="img_return"/>
     </par>
  </body>
 </smil>
```

The Markup Document 3 represents the data that is stored in the third layer and described using SMIL, which is the markup language with timing and synchronization functions. SMIL is also largely divided into the elements <head> and <body>. In the Markup Document 3, the element "head" includes elements "meta" and "layout". The element "meta" has already been described with respect to the above markup documents and its description will be omitted here. The element "layout" has children elements "root-layout" and "region". The element "root-layout" describes a size and a background color of a document to be displayed. The element "region" describes the layout of a SMIL document region where each media clip is formed, and an ID of the respective region.

The element "body" includes the following elements, which describes media clip sources:
<animation.....1> - Shockwave Flash File (.swf)
<audio...../> - Audio Clip File (.rm)
<img...../> - Image Clip File (.jpg.gif) / Not Use Animation GIF
<ref...../> - Document of Different Use (.htm.rp)
<text...../> - Text (.txt)
<textstream..../> - Text Stream (.rt)
<video...../> - Video Clip (.rm)

In the Markup Document 3, the element "img" is used to create the menu screen shown in FIG. 19. The element "img" can be used to link a document to a desired image or insert a command into the document. Also, Markup Document 3 may further include elements "a" and "anchor" for use as a hyperlink. In Markup Documents, all images are linked except three images. In SMIL, a reproduction control attribute "url" in the element "img" may have the following attribute values, including playTitle:
url :: hyperlink URL.
command:MDLvideo.playTitle(title_no): reproduce data starting from a title indicated in title_no.
command:MDLvideo.playTime(time): reproduce data starting from time indicated in (time).
command:MDLvideo.play(): start data reproduction.
command:MDLvideo.stop(): stop data reproduction.
command:MDLvideo.pause(): pause data reproduction.
command:MDLvideo.forward_scan(speed): high-speed forward reproduction at a speed specified in (speed).
command:MDLvideo.backward_scan(speed): high-speed backward reproduction at a speed specified in (speed).
command:MDLvideo.ptayChapter(chapter_no): if chapter_no == 0, move to a chapter having the largest chapter ID and reproduce data of the chapter.
If chapter_no > Maximum chapter ID, move to a chapter having the smallest chapter ID and reproduce data of the chapter.

### Industrial Applicability

As described above, according to a storage medium of the present invention, information regarding reproduction of multimedia data is divided into record units and reproduction units, and additional information regarding the record units and reproduction units are recorded on a second layer. Also, information regarding selection and navigation of a desired reproduction unit is recorded on a third layer. In this way, the operation of each layer can be distinguished. In the second layer, the data is recorded using a markup language to improve extensibility. In the third layer, the data is also recorded using the markup language to create additional data, representing a menu screen or the layout of a reproduction unit. The data regarding selection of the reproduction unit and the reproduction sequence is described using a script language or the markup language with timing and synchronization functions.

In order to store the multimedia data in the storage medium, a multimedia data recording apparatus, according to an aspect of the present invention, records the multimedia data on the first layer of the storage medium, divides the additional information of the multimedia recorded on the first layer into the record units and the reproduction units, and records the divided additional information on the second layer in a table format or by using the markup language. Here, the record units and the reproduction units may have multiple hierarchical structures. According to an aspect of the present invention, the record unit is a clip that is made by linking time information to position information when video object data is recorded at VBR, and the reproduction units are cells linked to the clip or a portion of the clip, chapters linked to a plurality of cells, and titles linked to a plurality of chapters.

In addition, navigation data regarding selection of the reproduction unit or the reproduction sequence is recorded on the third layer. The navigation data is described using either the script language executed in units of lines, or the markup language with timing and synchronization functions. Also, in the third layer, presentation data, representing a menu screen to select the reproduction unit or the reproduction sequence, is described using the markup language.

A storage medium, according to an aspect of the present invention, includes the multimedia data and the additional data. The additional data includes two different types of data: the additional information, which includes the record unit, attributes, and the reproduction unit of the multimedia data, and the navigation information, which relates to a selection of the reproduction unit and the reproduction sequence. The additional information is described using the markup language, thereby enabling an addition of new multimedia data regardless of an extension of a standard. Also, even if a new record unit or reproduction is prescribed, it is easy to support implementation of the extension. Further, both or one of the markup language and the script language is used to describe navigation data, which represents selection of the reproduction unit or the reproduction sequence. The markup language is also used to describe presentation data, which represents the menu screen to select the reproduction unit and a screen layout for the data reproduction, thereby enabling a menu structure and navigation with a high degree of flexibility.

While this invention has been particularly shown and described with reference to aspects thereof, it will be understood by those skilled in the art that various changes in form and details may be made therein without departing from the spirit and scope of the invention as defined by the appended claims.

## Claims

1. A computer readable data storage medium for use with a recording and/or reproducing apparatus, comprising:
a first file comprising at least one clip, the clip comprising the audio visual stream data and a timemap comprising information on reproduction time when the audio visual stream data is reproduced and information on a reproduction position of the audio visual stream data corresponding to the reproduction time; and
a second file comprising reproduction information for reproducing audio visual stream data, the reproduction information comprising information indicating a reproduction interval of the clip; and
a third file comprising navigation data which is used to select the reproduction information,
wherein the first file, the second file and the third file are recorded separately on the data storage medium.

2. The medium of claim 1, wherein the second file further comprises information pointing the timemap.

3. The medium of claim 1, wherein a first layer which the clip belongs to is distinguishable logically and physically, from a second layer which the reproduction information belongs to, and the second layer is distinguishable logically and physically, from a third layer which the navigation data belongs to.

4. The medium of claim 3, wherein the second layer is an upper layer of the first layer and the third layer is an upper layer of the second layer.

5. A reproducing apparatus for reproducing data from a data storage medium, comprising:
a reader which reads a first file comprising at least one clip, the clip comprising the audio visual stream data and a timemap comprising information on reproduction time when the audio visual stream data is reproduced and information on a reproduction position of the audio visual stream data corresponding to the reproduction time, a second file comprising reproduction information for reproducing audio visual stream data, the reproduction information comprising information indicating a reproduction interval of the clip, and a third file comprising navigation data which is used to select the reproduction information; and
a controller which reproduces the audio visual stream data from the data storage medium based on the first file, the second file and the third file,
wherein the first file, the second file and the third file are recorded separately on the data storage medium.

6. The apparatus of claim 5, wherein the second file further comprises information pointing the timemap.

7. The apparatus of claim 5, wherein a first layer which the clip belongs to, is distinguishable logically and physically, from a second layer which the reproduction information belongs to, and the second layer is distinguishable logically and physically, from a third layer which the navigation data belongs to.

8. The apparatus of claim 7, wherein the second layer is an upper layer of the first layer and the third layer is an upper layer of the second layer.
